Europäisches Patentamt

European Patent Office

Office européen des brevets

(19)

(11) Veröffentlichungsnummer: 0 355 349
A2

## (12) EUROPÄISCHE PATENTANMELDUNG

(21) Anmeldenummer: 89112343.2

(51) Int. Cl.4: C01B 3/56

(22) Anmeldetag: 06.07.89

(30) Priorität: 08.07.88 DE 3823143

(43) Veröffentlichungstag der Anmeldung:
28.02.90 Patentblatt 90/09

(84) Benannte Vertragsstaaten:
CH FR GB LI SE

(71) Anmelder: Kernforschungsanlage Jülich
GmbH
Wilhelm-Jonen-Strasse
D-5170 Jülich(DE)

(72) Erfinder: Konrad, Ralf
Berliner Strasse 10
D-6349 Sinn(DE)

(54) Sicherheitseinrichtung zur Verhinderung von Knallgasexplosionen.

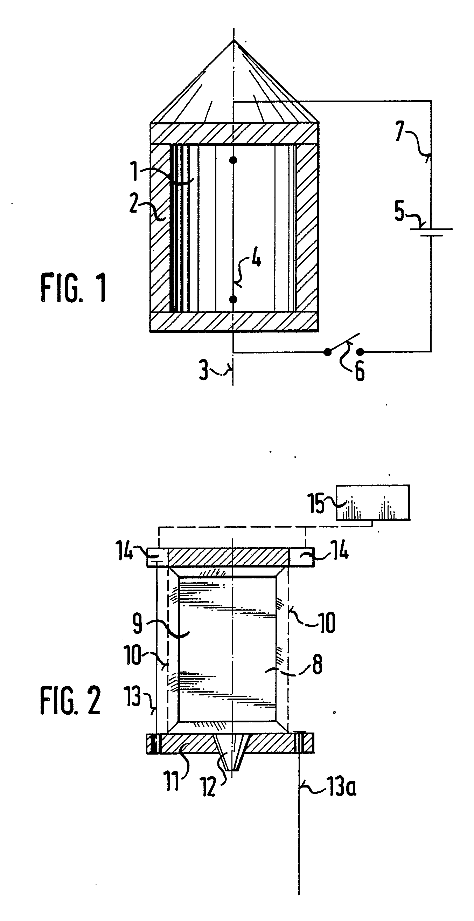

(57) Zur Verhinderung von Knallgasexplosionen wird eine Sicherheitseinrichtung angegeben, bei der das explosible Wasserstoff und Sauerstoff enthaltende Gasgemisch an einer zur Einleitung einer kontrollierten Wasserstoffoxidation geeigneten Oberfläche entlang geführt wird. Um hohe Umsätze für die Wasserstoffoxidation auf kleinem Raum zu erreichen, wird innerhalb einer Kammer (8) mit porösen Kammerwänden (2) durch die das Gasgemisch in die Kammer eindringen kann, s. Fig. 1, ein auf Zündtemperatur des Gasgemisches aufheizbares Heizelement (4) befestigt. Am Heizelement wird die Oxidation des Wasserstoffs eingeleitet. Die Kammerwände (2) werden dabei auf einer Temperatur gehalten, die unterhalb der Zündtemperatur des Gasgemisches in der Umgebung der Kammer (2) liegt. Zur Ausbildung der porösen Kammerwände (2) sind Sintermaterial oder poröse Keramiken geeignet. Auch ein Drahtgeflecht oder Drahtnetz kann eingesetzt werden.

FIG. 1

## Sicherheitseinrichtung zur Verhinderung von Knallgasexplosionen

Die Erfindung betrifft eine Sicherheitseinrichtung zur Verhinderung von Knallgasexplosionen durch Vorbeiführen des den Wasserstoff und Sauerstoff enthaltenden Gasgemisches an einer zur Einleitung der Oxidation des Wasserstoffes geeigneten Oberfläche.

Solche Sicherheitseinrichtungen weisen in erster Linie katalytisch wirkende Oberflächen auf, die die Wasserstoffoxidation, ohne daß Explosionen auftreten, bei niedrigerer Temperatur einleiten, insbesondere bei Temperaturen unterhalb von 500°C. Aus DE-OS 36 04 416 sind Vorrichtungen bekannt, bei denen das den Wasserstoff und Sauerstoff enthaltende Gasgemisch an Folienpaketen entlanggeführt wird, bei denen zumindest die Oberfläche aus Katalysatormaterial besteht. Eine ausreichende Oxidationswirkung wird erzielt, wenn eine möglichst große Katalysatoroberfläche für den Kontakt mit dem Gasgemisch zur Verfügung steht.

Aufgabe der Erfindung ist es, eine kompakt ausbildbare Sicherheitseinrichtung zu schaffen, bei der sich ohne Explosionsgefahr auf kleinem Raum ein hoher Umsatz für die Wasserstoffoxidation erzielen läßt.

Diese Aufgabe wird bei einer Sicherheitseinrichtung der eingangs genannten Art gemäß der Erfindung durch die in Patentanspruch 1 angegebenen Merkmale gelöst. Danach werden Wasserstoff und Sauerstoff in einer Kammer umgesetzt, in der ein Heizelement befestigt ist, das auf Zündtemperatur des Gasgemisches aufheizbar ist. Die Kammer weist poröse Wände auf, durch die Wasserstoff und Sauerstoff in die Kammer eintreten können, aber auch das am Heizelement gebildete Wasser wieder aus der Kammer ausströmen kann. Die Kammerwände sind auf eine Temperatur unterhalb Zündtemperatur des sich in der Umgebung der Sicherheitseinrichtung befindlichen Gasgemisches eingestellt. Der Umsatz von Wasserstoff und Sauerstoff erfolgt am Heizelement bei Zündtemperatur. Wesentlich für das Vermeiden von Knallgasexplosionen ist, daß beim Abfackeln des Gasgemisches am Heizelement die Kammerwände die Zündtemperatur des sie umgebenden Gasgemisches nicht erreichen, damit das Abbrennen des Wasserstoffs innerhalb der Kammer der Sicherheitseinrichtung nicht zum Auslöser für eine Knallgasexplosion außerhalb der Sicherheitseinrichtung wird.

Zweckmäßig ist es, als Heizelement einen Glühdraht einzusetzen, der durch Anlegen elektrischer Spannung beheizbar ist, Patentanspruch 2. Die Sicherheitseinrichtung läßt sich auf diese Weise mittels in der Sicherheitseinrichtung vorhandener Batterien für den Gefahrenfall betriebsbereit halten. Die Kammerwände werden aus porösem Material, beispielsweise aus poröser Sinterkeramik ausgebildet. Um einen günstigen Gasaustausch zu erreichen, besteht die Kammerwand nach Patentanspruch 3 aus einem Drahtgeflecht oder Drahtnetz. Bevorzugt ist die Temperatur der Kammerwand unter 400°C zu halten, Patentanspruch 4.

Tiefe Reaktionstemperaturen ergeben sich, wenn das Heizelement aus einem für die Oxidation von Wasser stoff katalytisch wirksamen Werkstoff besteht, Patentanspruch 5. Besonders geeignet sind nach Patentanspruch 6 hierzu Pd-Legierungen.

In Weiterbildung der Erfindung ist es vorgesehen die Kammerwände in der Weise verschließbar auszubilden, daß sie sich bei einer vorgebenen Wasserstoffkonzentration in der äußeren Umgebung der Sicherheitseinrichtung öffnen, Patentanspruch 7. Zum Abzug von in der Kammer bei der Wasserstoffoxidation gebildetem Kondenswasser weist die Kammer einen Kondenswasserabfluß auf, Patentanspruch 8. Eine Steigerung des Umsatzes läßt sich durch benachbarte Anordnung mehrerer Kammern erreichen, die vom Gasgemisch parallel durchströmbar sind.

Die Erfindung wird nachfolgend anhand von Ausführungsbeispielen näher erläutert. Die Zeichnung zeigt im einzelnen:

Figur 1 Sicherheitseinrichtung mit elektrisch beheiztem Heizelement;

Figur 2 Sicherheitseinrichtung mit einem katalytisch wirksamen Heizelement.

In Figur 1 ist eine Sicherheitseinrichtung mit einer Kammer 1 gezeigt, die von Kammerwänden 2 aus einem für Gase durchlässigen Material umschlossen ist. Zentral innerhalb der Kammer 1 ist parallel zur Kammerachse 3 ein Glühdraht als Heizelement 4 befestigt, daß über eine in Figur 1 schematisch angegebene Batterie 5 elektrisch aufheizbar ist. Der Heizstrom fließt, wenn ein Sicherheitsschalter 6 eine Verbindungsleitung 7 zwischen Batterie 5 und Heizelement 4 schließt.

Über die Batterie 5 ist das Heizelement auf Zündtemperatur eines Wasserstoff- und Sauerstoff enthaltenden Gasgemisches, im Ausführungsbeispiel auf eine Temperatur über 600°C aufheizbar. Bei dieser Temperatur wird mit dem Gasgemisch in die Gaskammer eindringender Wasserstoff abgefackelt. Die Kammerwände 2 sind vom Heizelement 4 soweit entfernt angeordnet, daß ihre Temperatur beim Abbrennen des Wasserstoffes nicht höher als 400°C ansteigt. Eine besondere Kühlung der Kammerwände ist in diesem Falle nicht erforderlich.

In Figur 2 ist eine Sicherheitseinrichtung wiedergegeben, bei der in einer Kammer 8 ein plattenförmiges Heizelement 9 angeordnet ist, das katalytisch wirksam ist und aus einer Pd-Legierung besteht. Bei einem solchen Heizelement liegt die Oxidationstemperatur für den Wasserstoff niedrig, es bedarf, um einen ausreichenden Umsatz zu erreichen, nur einer verhältnismäßig niedrigen Erwärmung des Heizelementes. Die Einrichtung zur Beheizung des Heizelementes, die wie in Figur 1 elektrisch erfolgen kann, ist in Figur 2 nicht wiedergegeben.

Die Kammer 8 weist im Ausführungsbeispiel nach Figur 2 Kammerwände 10 aus Drahtgeflecht oder Drahtnetz auf. Am Boden 11 der Kammer 8 ist ein Kondenswasserabfluß 12 für sich an den Kammerwänden 10 niederschlagendes Kondenswasser angebracht. Vor den Kammerwänden befinden sich verschiebbare oder aufklappbare Verschlußteile 13, die im Gefahrenfalle aus Verankerungen 14 lösbar sind, die im Ausführungsbeispiel am oberen Rand der Kammerwände 10 angeordnet sind. Die Verschlußteile 13 bewegen sich nach Lösen der Verankerung 14 infolge Schwerkraftwirkung. Im Ausführungsbeispiel rutschen die Verschlußteile 13 in hierfür vorgesehenen Führungen nach unten. In dieser geöffneten Stellung ist in Figur 2 das Verschlußteil 13a dargestellt.

Die Verankerungen 14 lösen sich bei einer vorgegebenen Wasserstoffkonzentration im Gasgemisch in der Umgebung der Sicherheitseinrichtung von selbst. Eine entsprechende Überwachungsanlage 15, die in Wirkverbindung mit den Verankerungen 14 steht, ist in Figur 2 schematisch dargestellt.

Die in den Ausführungsbeispielen gezeigten Sicherheitseinrichtungen lassen sich benachbart so anordnen, daß die Kammern vom Gasgemisch parallel durchströmt werden. Eine solche Anordnung beschleunigt den gewünschten raschen Abbau des Wasserstoffanteils im Gasgemisch.

**Ansprüche**

1. Sicherheitseinrichtung zur Verhinderung von Knallgasexplosionen, bei der Wasserstoff und Sauerstoff enthaltendes Gasgemisch an einer zur Ein-leitung der Wasserstoffoxidation geeigneten Ober-fläche entlanggeführt wird,
**dadurch gekennzeichnet,**
daß innerhalb einer Kammer (8) mit porösen, vom Gasgemisch durchströmbaren Kammerwänden (2, 10) ein auf Zündtemperatur des Gasgemisches aufheizbares Heizelement (4, 9) befestigt ist, und daß die Kammerwände (2, 10) auf einer Temperatur gehalten sind, die unter der Zündtemperatur des Gasgemisches in der äußeren Umgebung der Kammer (1, 8) liegt.

2. Sicherheitseinrichtung nach Anspruch 1,
**dadurch gekennzeichnet,**
daß als Heizelement (4) ein Glühdraht dient, der durch Anlegen elektrischer Spannung beheizbar ist.

3. Sicherheitseinrichtung nach Anspruch 1 oder 2,
**dadurch gekennzeichnet,**
daß die Kammerwand (10) aus einem Drahtgeflecht oder Drahtnetz besteht.

4. Sicherheitseinrichtung nach Anspruch 1, 2 oder 3,
**dadurch gekennzeichnet,**
daß die Temperatur der Kammerwand (4, 10) unter 400° C gehalten ist.

5. Sicherheitseinrichtung nach einem der vorhergehenden Ansprüche,
**dadurch gekennzeichnet,**
daß das Heizelement (9) katalytisch wirksam ist.

6. Sicherheitseinrichtung nach Anspruch 5,
**dadurch gekennzeichnet,**
daß das Heizelement (9) aus einer Pd-Legierung besteht.

7. Sicherheitseinrichtung nach Anspruch 5 oder 6,
**dadurch gekennzeichnet,**
daß die Kammerwände (2, 10) verschließbar sind und sich bei einer vorgegebenen Wasserstoffkonzen-tration in der äußeren Umgebung der Kammer (8) öffnen.

8. Sicherheitseinrichtung nach einem der vorhergehenden Ansprüche,
**dadurch gekennzeichnet,**
daß die Kammer (8) einen Kondenswasserabfluß (12) für innerhalb der Kammer (8) gebildetes Kondenzwasser aufweist.

9. Sicherheitseinrichtung nach einem der vorhergehenden Ansprüche,
**dadurch gekennzeichnet,**
daß mehrere Kammern benachbart und vom Gasgemisch parallel durchströmbar angeordnet sind.

FIG. 1

FIG. 2